## Europäisches Patentamt

## European Patent Office

## Office européen des brevets

(11) Numéro de publication: **0 191 685**
**B1**

(19)

(12) **FASCICULE DE BREVET EUROPÉEN**

(45) Date de publication du fascicule du brevet:
**10.05.89**

(21) Numéro de dépôt: **86400185.4**

(22) Date de dépôt: **29.01.86**

(51) Int. Cl.⁴: **G 21 C 7/14**

(54) **Dispositif électromagnétique de commande de barre de contrôle, à pertes thermiques réduites.**

(30) Priorité: **29.01.85  FR 8501216**

(43) Date de publication de la demande:
**20.08.86 Bulletin 86/34**

(45) Mention de la délivrance du brevet:
**10.05.89 Bulletin 89/19**

(84) Etats contractants désignés:
**AT BE CH DE GB IT LI SE**

(56) Documents cité:
**BE-A-753 529**
**DE-B-1 222 175**
**FR-A-1 371 802**
**US-A-3 449 603**
**US-A-3 486 095**

(73) Titulaire: **FRAMATOME, Tour Fiat 1 place de la Coupole, F-92400 Courbevoie (FR)**

(72) Inventeur: **Savary, Fernand, 14, rue Prince de Condé, F-95320 Saint Leu La foret (FR)**
Inventeur: **Le Saulnier, Guy, 69, avenue Gambetta, F-92400 Courbevoie (FR)**

(74) Mandataire: **Fort, Jacques, CABINET PLASSERAUD 84, rue d'Amsterdam, F-75009 Paris (FR)**

LIBER, STOCKHOLM 1989

## Description

L'invention a pour objet un dispositif électromagnétique de déplacement linéaire d'une barre de contrôle de réacteur nucléaire.

On connaît déjà de nombreux dispositifs électromagnétiques destinés à cet usage. On connaît notamment (FR-A-1 371 802 et BE-A-753 529) un dispositif électromagnétique de déplacement linéaire d'une tige, solidarisable d'une barre de contrôle de réacteur nucléaire, du type comprenant une enveloppe étanche en saillie hors du couvercle de la cuve de réacteur, dans laquelle sont déplacçables longitudinalement un premier et un second jeux de moyens de préhension de la tige, décalés dans le sens longitudinal, le premier jeu de moyens étant associé à un pôle mobile coopérant avec une bobine, dite de maintien, portée par l'enveloppe et déplaçable par excitation et coupure de la bobine entre une position où le premier jeu de moyens saisit la tige et une position où il la libère l'une de ces positions étant definie par appui sur un pôle fixe, et le second jeu de moyens étant associé à un plongeur mobile coopérant avec une bobine, dite de transfert, et déplaçable, par excitation et coupure de cette bobine, entre une position d'appui sur un autre pôle mobile, position dans laquelle le jeu de moyens saisit la tige, et une position où il la libère, ledit autre pôle mobile coopérant avec une bobine, dite de levée, permettant de déplacer ledit autre pôle mobile entre deux positions écartées d'un pas déterminé.

Les dispositifs connus du type ci-dessus défini fonctionnent de façon satisfaisante. La mise en action des différentes bobines suivant une séquence convenable permet de déplacer pas-à-pas, dans un sens ou dans l'autre, la tige et donc la barre de contrôle. En alimentant uniquement la bobine de maintien, on retient la tige dans une position bien déterminée. En cas de rupture d'alimentation de la totalité des bobines, la tige se trouve libérée et, dans le cas habituel où la barre est placée au-dessus du réacteur, son poids l'amène dans la position d'insertion maximale dans le coeur, ce qui provoque, en cas de coupure d'alimentation des dispositifs de toutes les barres, un arrêt d'urgence.

On a constaté depuis longtemps que les dispositifs du type décrit ci-dessus, dont l'enveloppe est complètement occupée par le réfrigérant du réacteur lors du fonctionnement, sont source de pertes thermiques importantes. Les phénomènes de convection et de conduction provoquent en effet un transfert de chaleur depuis le réacteur vers l'enveloppe qui doit être refroidie, en général par ventilation, pour maintenir les bobines à une température acceptable. Sur un réacteur de 900 MWe qu'on peut considérer comme représentatif, la puissance calorifique totale dissipée par chaque dispositif de déplacement de barres est d'environ 8,5 kW. Ces pertes exigent un dispositif de ventilation puissant pour les évacuer. Elles seront très difficilement acceptables sur les réacteurs en projet de type avancé (réacteurs à eau légère sous-modérés et/fou à variation de spectre par exemple) qui comporteront un nombre accru de barres de contrôle.

L'invention vise à réduire notablement les pertes thermiques des dispositifs électromagnétiques de déplacement linéaire, et notamment des dispositifs du type ci-dessus défini.

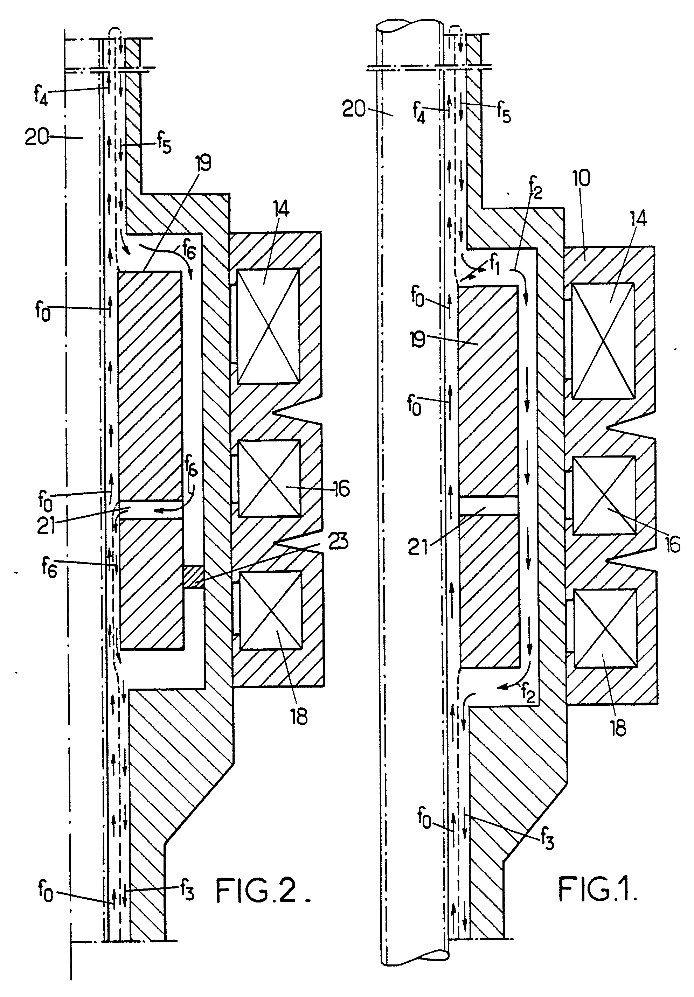

Ce résultat n'a pu être atteint que grâce à une détermination préalable des phénomènes qui sont à l'origine des transferts de chaleur depuis le réacteur. Une analyse complète a fait apparaître que la quasi-totalité de la chaleur qui remonte vers les enveloppes des dispositifs est véhiculée par un phénomène de thermosiphon, ce qui n'était nullement évident a priori. Dans le cas d'un dispositif du type ci-dessus défini, il est apparu que la circulation d'eau s'effectue suivant un schéma du genre montré en Figure 1, dans l'enveloppe 10 portant les bobines de levée 14, de transfert 16 et de maintien 18. Il s'établit un thermosiphon principal, dont la circulation se fait suivant les flèches f0, f1, f2 et f3 et un thermosiphon secondaire qui remonte jusqu'à la partie haute de l'enveloppe 10, suivant le trajet f0, f4, f5, f2, f3. Le thermosiphon principal constitue une boucle qui contourne l'ensemble des moyens de préhension, contenus dans le cadre 19, qu'on désigne généralement par le terme de "boîte à cliquets" lorsque les moyens de préhension comportent des cliquets coopérant avec des cannelures de la tige 20, ce qui est le cas le plus fréquent. La boîte à cliquets comporte, à un niveau intermédiaire, une brèche, figurée en 21, formée par les saignées nécessaires au passage des cliquets. Mais cette brèche ne contribue pas de façon appréciable à la formation d'un thermosiphon.

Il est par ailleurs indispensable que le réfrigérant puisse passer de la cuve vers l'extrémité haute de l'enveloppe 10, avec une perte de charge aussi réduite que possible, lorsqu'on provoque la chute des barres car une insertion rapide est nécessaire en cas d'arrêt d'urgence ou "scram". Il semble en conséquence impossible, à première vue, d'interrompre ou d'étrangler les passages de formation des thermosiphons sans augmenter de façon inadmissible le temps de chute des barres.

Ce problème est résolu par l'invention dans un dispositif du type ci-dessus défini grace aux dispositions suivant la partie caractérisante de la revendication 1.

La coupure du thermosiphon n'est effective que lorsque le pôle mobile associé au premier jeu de moyens est en position de maintien de la tige. Dans la pratique, cette limitation est sans inconvénient, car le mode d'utilisation des mécanismes est tel que cette situation est celle qui se présente pendant 98 % environ du temps de fonctionnement du réacteur.

La Figure 2 (où les organes correspondant à ceux de la Figure 1 sont désignés par le même numéro de référence) montre le schéma de circulation qu'on obtient alors, lorsque le premier jeu de moyens de préhension est en position de maintien et obture, en 23, la branche de retour (branche froide) des thermosiphons. Les boucles des thermosiphons ne peuvent se refermer que par les passages étranglés 21 que constituent les lumières des cliquets de transfert. Et surtout, le fait que les branches ascendantes et descendantes des thermosiphons doivent emprunter le même espace annulaire, compris entre la tige de commande 20 et la boîte à cliquets, sur une longueur notable freine considérablement les courants de convection.

Dans la pratique, le pôle mobile coopérant avec la bobine de maintien constituera en général un clapet mobile de fermeture de conduits ménagés dans un pôle fixe coopérant avec lui, le pôle mobile venant s'appliquer contre le pôle fixe lorsque la bobine de maintien est alimentée.

Comme on l'a indiqué plus haut, il est nécessaire d'imposer une perte de charge aussi réduite que possible au liquide qui doit passer au-dessus de la tige lorsqu'on veut provoquer la chute des barres. Pour cela, il faut que la section totale offerte par les conduits soit au moins équivalente à la section de passage offerte au liquide par un jeu annulaire entre l'enveloppe et le pôle fixe dans les dispositifs connus. Il est également souhaitable de réduire les pertes de charge singulières dues en particulier aux variations brutales d'orientation et de section du trajet d'écoulement. On peut en particulier, dans ce but, donner une section évasée à la partie inférieure du pôle mobile, pour qu'il y ait convergence des filets fluides à l'entrée d'un passage annulaire ménagé entre le pôle mobile et l'enveloppe.

L'invention sera mieux comprise à la lecture de la description qui suit d'un mode particulier d'exécution, donné à titre d'exemple non limitatif et d'une variante. La description se réfère aux dessins qui l'accompagnent, dans lesquels;

- les Figures 1 et 2, déjà mentionnées, sont des schémas montrant les trajets de circulation par thermosiphon dans un dispositif classique de déplacement de barres de contrôle et dans un dispositif suivant l'invention, respectivement;
- la Figure 3 montre un dispositif constituant un mode particulier d'exécution de l'invention, en demi-coupe suivant un plan passant par l'axe;
- les Figures 4A et 4B montrent schématiquement une variante de réalisation, respectivement en positions ouverte et fermée.

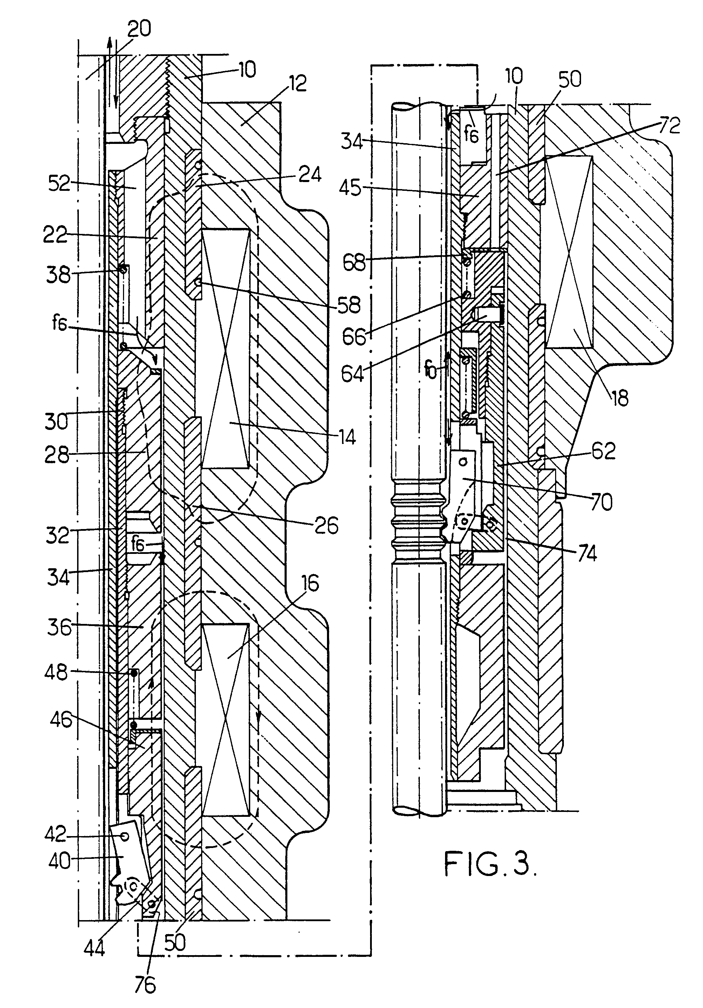

Le dispositif montré en Figure 3 est destiné à manoeuvrer une barre de contrôle de réacteur nucléaire refroidi et modéré à l'eau sous pression. Sa constitution générale ne sera décrite que de façon sommaire, étant donné qu'elle est déjà connue.

Le dispositif comporte une enveloppe externe étanche 10 sur laquelle est fixée une carcasse magnétique 12 délimitant avec l'enveloppe des logements annulaires de réception des trois bobines 14, 16 et 18, (bobine de levée, bobine de transfert et bobine de maintien). La tige 20 à déplacer est montée dans l'axe d'un canal ménagé par l'enveloppe 10. Cette tige comporte des cannelures régulièrement réparties de préhension de la tige par les seconds moyens et les premiers moyens mentionnés plus haut, qu'on décrira successivement.

Les seconds moyens comportent un pôle annulaire fixe 22 qui coopère avec la carcasse 12 et deux bagues magnétiques 24 et 26 solidaires de l'enveloppe 10 pour constituer la partie fixe d'un circuit magnétique dont la partie mobile est constituée par un pôle de levée 28. Ce pôle est solidaire, par exemple par une liaison filetée 30, d'un fourreau 32 monté coulissant sur une chemise 34 dont l'extrémité supérieure est solidaire du pôle fixe 22. Le fourreau 32 porte également un pôle de transfert 36. Un ressort de rappel 38 comprimé entre le pôle fixe 22 et le pôle mobile de levée 28 tend à repousser l'équipage mobile comprenant les pôles 28 et 36 et le fourreau 32 vers la position de butée basse dans laquelle il est montré en Figure 3. Cette position de butée est définie par l'appui de la tranche inférieure du fourreau 32 contre un pôle annulaire fixe 46 dont le rôle apparaîtra plus loin. L'excitation de la bobine 14 crée un champ magnétique qui tend à soulever le pôle mobile 28 pour l'amener en appui contre le pôle fixe 22.

Plusieurs cliquets de transfert 40 (trois par exemple) sont régulièrement répartis autour de la tige 20 et tournent chacun sur un axe 42 solidaire du fourreau 32. Chacun des cliquets 40 est déplaçable entre une position de repos où il est montré en Figure 3 et une position de travail où il est engagé dans les cannelures de la tige 20. Le mécanisme de manoeuvre des cliquets comporte un plongeur 46 en matériau magnétique monté à frottement doux sur le fourreau 32 et des biellettes 44 articulées, d'une part, sur les cliquets, d'autre part, sur le plongeur 46. Un ressort de rappel 48 comprimé entre le pôle de transfert 36 et le plongeur 46 tend à maintenir ce dernier dans la position de repos où il est montré en Figure 3, pour laquelle les cliquets 40 sont dégagés de la tige. La bobine de transfert 16 est placée de façon que, lorsqu'elle est excitée, elle crée un champ magnétique dans un circuit comportant la carcasse 12, la bague magnétique 26, le pôle de transfert 36, le plongeur 46 et une autre bague magnétique 50 et amène le plongeur 46 en butée contre le pôle de transfert 36.

On voit que l'excitation de la bobine 16, puis de la bobine 14 sans coupure de la bobine 16, permet de soulever la tige d'un pas.

Les premiers moyens, coopérant avec la bobine de maintien 18, présentent, eux aussi, une constitution générale classique. Ces moyens sont représentés sur la Figure 3 dans la position qu'ils occupent lorsque la bobine 18 est excitée. Ils comprennent un pôle mobile 62 en deux parties assemblées par filetage et arrêtées par une broche 64. Le ressort de rappel 66, agissant à

EP 0 191 685 B1

l'encontre de l'attraction de la bobine 18, est logé dans un chambrage du pôle 62. Une bague amagnétique 68 est avantageusement interposée entre le ressort 66 et le pôle fixe 45. Cette bague, dont la partie qui sépare les pôles 62 et 46 peut être très mince, évite le risque de collage par magnétisme rémanent. Des cliquets de maintien 70 sont montés de façon similaire à celle des cliquets 40, de façon à être commandés par le pôle mobile 62.

Conformément à l'invention, le pôle mobile 62 et le pôle fixe 45 des premiers moyens constituent un clapet, fermé lorsque la bobine de maintien est alimentée, ouvert lorsque la bobine est désexcitée et que le pôle mobile est séparé du pôle fixe. Ce clapet est placé sur la branche descendante ou branche froide du trajet de circulation d'eau par effet de thermosiphon, de façon à interrompre le thermosiphon. Dans le mode de réalisation illustré, le pôle fixe 45 ne laisse pas subsister de jeu de circulation d'eau entre lui et l'enveloppe 10. En contrepartie, plusieurs conduits 72 parallèles à l'axe de la tige sont ménagés dans le pôle fixe 45. La section totale de passage d'eau offerte par ces conduits est suffisante pour que la perte de charge qu'ils font subir à l'eau qui les traverse lors de la chute de la barre reste acceptable. A titre d'exemple, sur les configurations actuelles de réacteur de puissance à eau sous pression, dont l'enveloppe 10 a un diamètre interne de 133 mm, on peut prévoir seize trous de 11 mm de diamètre.

La présence des conduits 72 diminue la section de matériau ferromagnétique offerte aux lignes de force de champ magnétique créé par la bobine 18. Il est souhaitable de réduire en contrepartie le diamètre du chambrage du ressort de rappel 66 qui assure également le maintien de la bague 68 contre le pôle fixe 45, afin de redonner une valeur suffisante à la section de matériau ferromagnétique.

La bague 68, dans laquelle sont percés des trous prolongeant les conduits 72, constitue le siège d'un clapet dont l'organe mobile est formé par le pôle mobile 62 dont le diamètre externe est suffisant pour qu'il recouvre les trous ménagés dans la bague 68 et les ferme lorsqu'il est collé contre le pôle fixe 45 par l'attraction de la bobine 18. Un jeu 74 subsiste entre ce pôle mobile et l'enveloppe 10 et constitue un trajet de passage d'eau lors de la chute de la barre, comme on le verra plus loin.

Lorsque le clapet est fermé, comme indiqué sur la Figure 3, les courants de convection ne peuvent plus s'établir qu'en empruntant les lumières de passage des cliquets de transfert (flèches f6) et sont naturellement réduits. Dans la pratique, pour un dispositif classique dans lequel la dissipation totale est de 8,5 kW, la majeure partie des 4,5 kW dissipés au niveau des bobines sera épargnée par mise en oeuvre de l'invention. Le reste provient essentiellement de la transmission de chaleur par le couvercle du réacteur et par les adaptateurs des mécanismes soudés au couvercle. Cette transmission peut être réduite par calorifugeage du dessus du couvercle. La chaleur qui traverse la boîte à cliquets et passe dans la gaine supérieure est comparativement faible.

Il convient de réduire le plus possible la perte de charge subie par l'eau qui doit remonter au-dessus de la tige en cas de chute de barre. Pour cela, il convient de réduire le plus possible les pertes de charge singulières. Dans le cas illustré en Figure 3, on donne dans ce but une forme tronconique à la partie inférieure du pôle 46. On constitue ainsi une zone convergente 76 favorable à une réduction des pertes de charge et qui, au surplus, rend moins brutal le changement d'orientation des filets d'eau.

On voit que, en cas de chute de la barre et de la tige 20 qui l'accompagne, l'eau qui doit passer de la cuve du réacteur à l'espace situé au-dessus de la tige s'écoule en suivant le trajet des branches chaude et froide des thermosiphons. Elle s'écoule notamment en sens inverse des flèches f3, f2, f6 et f5 des Figures précédentes.

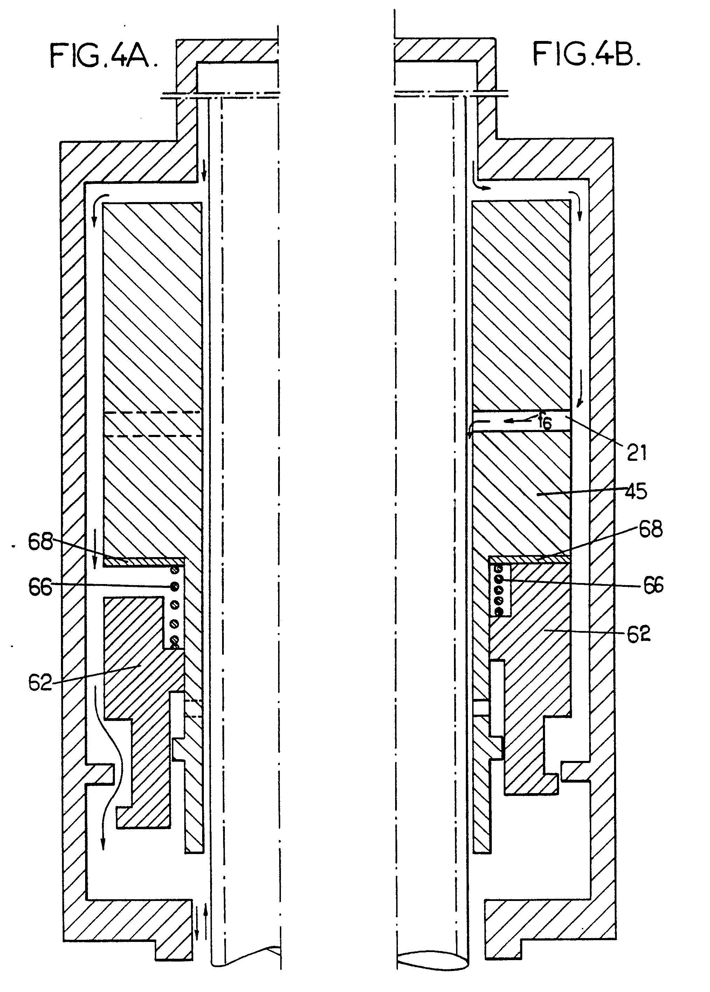

Les dispositifs dont le pôle mobile et/ou le pôle fixe de l'électro-aimant de maintien constituent eux-mêmes un élément constitutif d'un clapet de coupure ne sont pas les seuls à pouvoir remplir cette fonction de coupure de la branche froide de la boucle principale du thermosiphon. Des dispositifs à tiroir, tels que celui schématisé en Figures 4A et 4B (où les organes correspondant à ceux de la Figure 3 sont désignés par les mêmes numéros de référence) peuvent également remplir ce rôle. Le pôle-mobile 62 joue alors le rôle de tiroir.

Les modes particuliers de réalisation qui viennent d'être décrits ne sont nullement exclusifs et on peut associer les pôles fixeet mobile de maintien de façon différente de celles qui ont été envisagées. Il doit être entendu que de télles variantes, ainsi plus généralement que toutes celles où le mouvement du pôle-mobile de l'étage de maintien est utilisé pour couper ou freiner l'écoulement dans la boucle principale du thermosiphon quand le pôle-mobile 62 est attiré par le pôle fixe 45 sont comprises dans le cadre de l'objet des revendications.

## Revendications

1. Dispositif électromagnétique de déplacement linéaire d'une barre de contrôle de réacteur nucléaire refroidi par circulation d'un fluide, comprenant une enveloppe étanche (10) en saillie hors du couvercle de la cuve de réacteur, dans laquelle sont déplaçables longitudinalement un premier et un second jeux de moyens de préhension d'une tige (20) solidaire de la barre de contrôle, décalés dans le sens longitudinal,

le premier jeu de moyens (70) étant associé à un pôle mobile (62) coopérant avec une bobine (18) de maintien, portée par l'enveloppe (10), et déplaçable par excitation et coupure de la bobine entre une position haute où le premier jeu de moyens saisit la tige et une position basse où il la libère, l'une de ces positions étant définie par l'appui du pôle mobile (62) sur un pôle fixe (45), et

le second jeu de moyens (40) étant associé à un plongeur mobile (46) coopérant avec une bobine (16) de transfert et déplaçable, par excitation et coupure de cette bobine (16), entre une position haute d'appui sur un autre pôle mobile (36), position haute dans laquelle le second jeu de moyens saisit la tige (20), et une position basse où il la libère, ledit autre pôle mobile (36) coopérant avec une bobine (14) de levée, permettant de déplacer ledit autre pôle mobile (36) entre deux positions écartées d'un pas déterminé,

caractérisé en ce que le pôle mobile (62) coopérant avec la bobine de maintien (18) constitue un clapet mobile de fermeture de conduits (72) ménagés dans le pôle fixe (45) constitué de façon à interdire le passage de fluide entre lui et l'enveloppe, et en conséquence de coupure d'un thermosiphon de circulation de fluide réfrigérant par convection entre l'intérieur de la cuve et l'espace délimité par l'enveloppe.

2. Dispositif selon la revendication 1, caractérisé en ce qu'une bague (68) en matériau amagnétique est maintenue en contact avec le pôle fixe (45) par un ressort (66) prenant appui sur le pôle mobile (62) et est percée de trous dans le prolongement des conduits (72).

3. Dispositif selon l'une quelconque des revendications précédentes, caractérisé en ce que le pôle mobile (62) est monté de façon à coulisser sur un fourreau fixe (34) solidaire des pôles fixes et en ce qu'un jeu annulaire (74) est ménagé entre le pôle mobile (62) associé à la bobine de maintien et l'enveloppe (10).

4. Dispositif selon l'une quelconque des revendications précédentes, caractérisé en ce que les trajets de passage de fluide de la cuve vers le haut de l'enveloppe en cas de chute de la tige et de la barre sont dessinés de façon à réduire les pertes de charge imposées au fluide.

5. Dispositif selon la revendication 4, caractérisé en ce que la surface externe du plongeur (46) délimite avec l'enveloppe (10) un jeu de circulation de fluide et présente une forme tronconique à sa partie inférieure pour délimiter un convergent (76) d'entrée d'eau dans le jeu.

**Patentansprüche**

1. Elektromagnetische Vorrichtung zur Linearverstellung eines Regelstabes eines durch Zirkulation eines Fluids gekühlten Kernreaktors, mit einer dichten Hülle (10), die über den Deckel des Reaktorgefäßes hinausragt und in der ein erster und ein zweiter Satz von Greifmitteln für eine mit dem Regelstab verbundene Stange (20) verstellbar sind, wobei die Sätze in der Längsrichtung versetzt angeordnet sind,

wobei der erste Satz von Mitteln (70) einem beweglichen Pol (62) zugeordnet ist, der mit einer von der Hülle (20) getragenen Haltespule (18) zusammenwirkt und durch Erregung bzw. Ausschalten der Spule zwischen einer angehobenen Stellung, in welcher der erste Satz von Mitteln die Stange ergreift, und einer abgesenkten Stellung bewegbar ist, in welcher der Satz die Stange freigibt, wobei eine dieser Stellungen durch Anlage des beweglichen Poles (62) an einem feststehenden Pol (45) definiert ist, und

der zweite Satz von Mitteln (40) einem beweglichen Plunger (46) zugeordnet ist, der mit einer Transferspule (16) zusammenwirkt und durch Erregung bzw. Ausschalten dieser Spule (16) zwischen einer angehobenen Anlagestellung an einem anderen beweglichen Pol (36), in welcher der zweite Satz von Mitteln die Stange (20) ergreift, und einer abgesenkten Stellung bewegbar ist, in welcher er die Stange freigibt, wobei der andere bewegliche Pol (36) mit einer Hubspule (14) zusammenwirkt, die es ermöglicht, den anderen beweglichen Pol (36) zwischen zwei Stellungen zu verstellen, die um einen vorbestimmten Schritt voneinander entfernt sind,

dadurch gekennzeichnet, daß der mit der Haltespule (16) zusammenwirkende bewegliche Pol (62) eine bewegliche Schließklappe für im feststehenden Pol (45) ausgebildete Kanäle (72) bildet, wodurch eine Unterbrechung der Fluidströmung zwischen dem Pol und der Hülle erreicht wird, und folglich das Unterbrechen eines durch Konvektion zwischen dem Inneren des Gefäßes und dem von der Hülle begrenzten Raum gebildeten Thermosiphons der Kühlfluidströmung.

2. Vorrichtung nach Anspruch 1, dadurch gekennzeichnet, daß ein Ring (66) aus antimagnetischem Material durch eine beweglichen Pol (62) angreifende Feder (66) in Brührung mit dem feststehenden Pol (45) gehalten wird und in Verlängerung der Kanäle (72) von Öffnungen durchsetzt ist.

3. Vorrichtung nach einem der vorhergehenden Ansprüche, dadurch gekennzeichnet, daß der bewegliche Pol (62) auf einer feststehenden Hülse (34) gleitverschieblich gelagert ist, die mit den feststehenden Polen verbunden ist und daß ein Ringspiel (74) zwischen dem der Haltespule zugeordneten beweglichen Pol (62) und der Hülle (10) vorhanden ist.

4. Vorrichtung nach einem der vorhergehenden Ansprüche, dadurch gekennzeichnet, daß die Strömungswege des Fluids aus dem Gefäß zum oberen Abschnitt der Hülle bei einem Abfallen der Stange und des Stabes so ausgebildet sind, daß die Druckverluste des Fluids reduziert werden.

5. Vorrichtung nach Anspruch 4, dadurch gekennzeichnet, daß die Außenfläche des Plungers (46) mit der Hülle (10) ein Spiel für die Fluidströmung begrenzt und an seinem unteren Teil kegelstumpfförmige Gestalt hat, um einen Konus (76) für den Eintritt des Wassers das Spiel zu begrenzen.

## Claims

1. Electromagnetic device for rectilinearly moving a control bar of a fluid cooled nuclear reactor, comprising a fluid-tight casing (10) projecting from the lid of the reactor vessel in which are longitudinally movable a first and a second sets of means for gripping a shaft fast with the control bar, staggered in the longitudinal direction,

the first set of means (70) being associated with a movable pole (62) cooperating with a holding coil (18) carried by the casing (10) and movable by energization and de-energization of the coil between a higher position where the first set of means grips the shaft and a lower position where it releases it, one of the positions being defined by contact of the movable pole (62) on a fixed pole (45), and

the second set of means (40) being associated with a movable plunger (46) cooperating with a transfer coil (16) and movable, by energization and de-energization of the coil (16) between a higher position of contact on an other movable pole (36), in which higher position the second set of means grips the shaft (20), and a lower position where it releases it, said other movable pole (36) cooperating with a lifting coil (14) which makes it possible to move said other movable pole (36) between two positions spaced apart by a predetermined step,

characterized in that the movable pole (62) cooperating with the holding coil (18) constitutes a movable valve for closing conduits (72) formed in the fixed pole (45) which is arranged for preventing passage of fluid between it and the casing and consequently for cutting off a thermosyphon for circulation of the cooling fluid by convection between the inside of the vessel and the space defined by the casing.

2. Device according to claim 1, characterized in that a ring (68) of amagnetic material is retained in contact with the fixed pole (45) by a spring (66) bearing on the movable pole (62) and is formed with holes aligned with the conduits (72).

3. Device according to any one of the preceding claims, characterized in that the movable pole (62) is slidably received on a fixed sleeve (34) fast with the fixed poles and in that an annular gap (74) is formed between the movable pole (62) associated with the holding coil and the casing (10).

4. Device according to any one of the preceding claims, characterized in that the paths of fluid flow from the vessel to the top of the casing upon fall of the shaft and bar are designed to reduce the head losses impressed to the fluid.

5. Device according to claim 4, characterized in that the external surface of the plunger (46) defines a gap for fluid flow with the casing (10) and has a frustoconical shape at its lower portion to define a convergent portion (76) for water entrance into the gap.

FIG.2.

FIG.1.

FIG.3.

# FIG.4A.

# FIG.4B.

68

66

62

16

21

45

68

66

62